## Europäisches Patentamt
## European Patent Office
## Office européen des brevets

(19)

(11) Numéro de publication: **0 086 720**
**B1**

(12) **FASCICULE DE BREVET EUROPEEN**

(45) Date de publication du fascicule du brevet:
16.10.85

(51) Int. Cl.⁴: **H 01 M 10/08**

(21) Numéro de dépôt: **83400302.2**

(22) Date de dépôt: **14.02.83**

(54) Electrolyte pour accumulateur au plomb et accumulateur comportant un tel électrolyte.

(30) Priorité: **15.02.82 FR 8202420**

(43) Date de publication de la demande:
**24.08.83 Bulletin 83/34**

(45) Mention de la délivrance du brevet:
**16.10.85 Bulletin 85/42**

(84) Etats contractants désignés:
**AT BE CH DE FR GB IT LI LU NL SE**

(56) Documents cités:
**FR - A - 642 145**

(73) Titulaire: **COMPAGNIE EUROPEENNE D'ACCUMULATEURS Société anonyme dite:, 16, rue de la Baume, F-75008 Paris (FR)**

(72) Inventeur: **Mirebeau, Pierre, 21, rue Jean-Baptiste Corot, F-91120 Villebon Sur Yvette (FR)**
Inventeur: **Gindre, Jean, 18, route de Bonègue, F-18100 Vierzon (FR)**

(74) Mandataire: **Weinmiller, Jürgen et al, Zeppelinstrasse 63, D-8000 München 80 (DE)**

## Description

La présente invention a pour objet un électrolyte pour accumulateur au plomb ainsi que l'accumulateur utilisant un tel électrolyte.

Dans les batteries d'accumulateurs au plomb classiques, l'électrolyte utilisé est, comme on le sait, une solution aqueuse d'acide sulfurique.

Dans le but de favoriser les décharges profondes et d'augmenter la durée de vie en cyclage des batteries, il est connu d'ajouter dans l'électrolyte de l'acide phosphorique, et en particulier de l'acide orthophosphorique.

Un tel électrolyte a, par exemple, été décrit dans le document FR-A 642145. Il est prévu dans ce brevet que l'acide phosphorique peut être ajouté à l'électrolyte sous forme d'acide orthophosphorique ou sous forme de substances se transformant en acide orthophosphorique dans l'accumulateur, comme l'acide méta- ou pyrophosphorique.

On a pu toutefois constater que cette introduction d'acide phosphorique pouvait entraîner certains inconvénients. Ainsi, les accumulateurs comportant un tel électrolyte présentent-ils une énergie massique inférieure à celle des accumulateurs dont l'électrolyte ne comporte pas d'acide phosphorique. Ces accumulateurs sont par ailleurs difficiles à former. Enfin, lors de leur cyclage, il se produit des courts-circuits par migration de la matière active positive, ce qui limite, bien entendu, leur durée de vie.

La présente invention permet de remédier à ces inconvénients.

L'invention a pour objet un électrolyte pour accumulateur au plomb, comportant une solution aqueuse d'acide sulfurique et contenant de l'acide phosphorique, caractérisé par le fait qu'il comporte 5 à 30 g/l d'acide pyrophosphorique et 5 à 50 g/l d'acide orthophosphorique, la quantité totale d'acide phosphorique contenu dans l'électrolyte étant inférieure ou égale à 60 g/l.

L'invention a également pour objet les accumulateurs au plomb comportant l'électrolyte précité.

Il a ainsi été découvert par la titulaire que, d'une manière surprenante, l'addition simultanée, dans l'acide sulfurique, d'acides ortho- et pyrophosphoriques permettait d'éviter les inconvénients précités que l'on constatait lorsque l'on introduisait seulement de l'acide orthophosphorique ou de l'acide pyrophosphorique.

On obtient ainsi une énergie massique plus élevée, une formation plus facile, se traduisant par une première décharge plus longue et une durée de vie plus longue.

Selon une caractéristique de l'invention, les quantités d'acides orthophosphorique et pyrophosphorique présentes dans l'électrolyte sont sensiblement égales.

Avantageusement elles se situent au voisinage de 10 g/l.

Les avantages résultant de la mise en œuvre de l'invention sont mis en évidence en se reportant aux résultats d'essais figurant sur le tableau ci-après et qui portent sur les mesures des caractéristiques suivantes:

— énergie massique «E» (en Wh/kg),
— durée de la première décharge «D» (en minute) après formation,
— nombre de cycles «N» précédant l'apparition du premier court-circuit «CC», ou durant lequel aucun court-circuit «CC» n'a été constaté,

pour des accumulateurs différant uniquement par la nature et la teneur en acide phosphorique présent dans l'électrolyte.

Les essais ont été effectués sur des accumulateurs au plomb, étanches, comportant 6 plaques négatives et 5 plaques positives. Le poids de matière active positive était de 100 g. La capacité totale de 10 Ah Les grilles des plaques positives et négatives étaient constituées par un alliage plomb-calcium à 0,09% en calcium.

L'électrolyte comportait 94 cm$^3$ de H$_2$SO$_4$ de densité 1,26 avant formation et imprégnait un séparateur constitué par un feutre de verre.

Les décharges ont été effectuées sous intensité constante, égale à 2 ampères.

| Nature de l'acide phosphorique présent dans l'électrolyte et teneur en g/l | E | D | N |
|---|---|---|---|
| 1) ortho 5 + pyro 5 | 10,20 | 277 | pas de CC après 65 cycles |
| 2) ortho 10 | 9,95 | 270 | CC au 12$^e$ cycle |
| 3) pyro 10 | 9,95 | 270 | CC au 65$^e$ cycle |
| 4) ortho 50 + pyro 5 | 12,04 | 260 | CC au 12$^e$ cycle |
| 5) ortho 55 | 10,75 | 205 | CC au 1$^{er}$ cycle |
| 6) pyro 55 | 10,97 | 200 | CC au 1$^{er}$ cycle |
| 7) ortho 5 + pyro 30 | 11,88 | 275 | CC au 1$^{er}$ cycle |
| 8) ortho 35 | 11,40 | 270 | CC au 1$^{er}$ cycle |
| 9) pyro 35 | 11,08 | 270 | CC au 1$^{er}$ cycle |
| 10) ortho 30 + pyro 30 | 12,47 | 245 | CC au 12$^e$ cycle |
| 11) ortho 60 | 10,22 | 205 | CC au 1$^{er}$ cycle |
| 12) pyro 60 | 10,32 | 200 | CC au 1$^{er}$ cycle |
| 13) ortho 10 + pyro 10 | 11,83 | 290 | pas de CC après 136 cycles |
| 14) ortho 20 | 11,77 | 270 | CC au 1$^{er}$ cycle |
| 15) pyro 20 | 11,08 | 275 | CC au 1$^{er}$ cycle |

Il ressort de ce tableau que le meilleur compromis entre la capacité massique et la durée de vie est obtenu avec les conditions de l'essai 13, c'est-à-dire 10 g/l d'acide orthophosphorique + 10 g/l d'acide pyrophosphorique.

Des résultats également satisfaisants sont obtenus dans le cas de l'essai 1.

Dans le cas de l'essai 4, si on le compare aux essais 5 et 6, on constate que la capacité massique est légèrement améliorée, mais surtout que la durée de vie est très nettement accrue; c'est également le cas de l'essai 10 lorsqu'on le compare aux essais 11 et 12.

Enfin, si on compare l'essai 7 aux essais 8 et 9, on constate une légère augmentation de la capacité massique pour des durées de vie égales.

Des résultats équivalents à ceux exposés ci-dessus ont été obtenus sur des accumulateurs non étanches (à l'électrolyte libre) dont les grilles étaient constituées par un alliage plomb-antimoine à 2,5% d'antimoine.

Par ailleurs, on a obtenu également des résultats équivalents en faisant varier la densité de l'acide sulfurique pendant l'utilisation de l'accumulateur.

L'invention est mise en œuvre dans tous les types d'accumulateurs au plomb et notamment dans les batteries étanches.

Bien entendu, l'invention n'est nullement limitée aux modes de réalisation décrits.

## Revendications

1. Electrolyte pour accumulateur au plomb comportant une solution aqueuse d'acide sulfurique et contenant de l'acide phosphorique, caractérisé par le fait qu'il comporte 5 à 30 g/l d'acide pyrophosphorique et 5 à 50 g/l d'acide orthophosphorique, la quantité totale d'acide phosphorique contenu dans l'électrolyte étant inférieure ou égale à 60 g/l.

2. Electrolyte selon la revendication 1, caractérisé par le fait que les quantités d'acides ortho et pyrophosphorique présentes dans l'électrolyte sont sensiblement égales.

3. Electrolyte selon la revendication 2, caractérisé par le fait que les quantités d'acides ortho- et pyrophosphoriques se situent au voisinage de 10 g/l.

4. Accumulateur au plomb comportant un électrolyte selon l'une des revendications 1 à 3.

## Patentansprüche

1. Elektrolyt für einen Bleiakkumulator mit einer wässerigen Lösung von Schwefelsäure und mit Phosphorsäure, dadurch gekennzeichnet, dass er 5 bis 30 g/l Pyrophosphorsäure und 5 bis 50 g/l Orthophosphorsäure aufweist, wobei die Gesamtmenge der im Elektrolyten enthaltenen Phosphorsäure höchstens 60 g/l beträgt.

2. Elektrolyt nach Anspruch 1, dadurch gekennzeichnet, dass die im Elektrolyten vorhandenen Mengen an Ortho- und Pyrophosphorsäure im wesentlichen gleich sind.

3. Elektrolyt nach Anspruch 2, dadurch gekennzeichnet, dass die Mengen an Ortho- und Pyrophosphorsäure in der Nähe von 10 g/l liegen.

4. Bleiakkumulator, der einen Elektrolyten nach einem der Ansprüche 1 bis 3 enthält.

## Claims

1. An electrolyte for a lead accumulator comprising an aqueous solution of sulphuric acid and containing phosphoric acid, characterized in that the electrolyte includes 5 to 30 grams per liter of pyrophosphoric acid and 5 to 50 grams per liter of orthophosphoric acid, the total quantity of phosphoric acids contained in the electrolyte being equal to or less than 60 grams per liter.

2. An electrolyte according to claim 1, characterized in that the quantities of ortho- and of pyrophosphoric acid present in the electrolyte are substantially equal.

3. An electrolyte according to claim 2, characterized in that the quantities of ortho- and of pyrophosphoric acid in the electrolyte are about 10 grams per liter.

4. A lead accumulator including an electrolyte according to any one of claims 1 to 3.